# EUROPEAN PATENT SPECIFICATION

(11) **EP 3 130 160 B1**
(45) Date of publication and mention of the grant of the patent: **25.07.2018**
(21) Application number: 15716662.0
(22) Date of filing: 31.03.2015
(51) Int. Cl.: H04W 4/02

(54) **WIRELESS DOCKING/UNDOCKING USING FINE TIME MEASUREMENT**
DRAHTLOSES ANDOCKEN/ABDOCKEN MIT FEINZEITMESSUNG
CONNEXION/DÉCONNEXION SANS FIL À L'AIDE DE MESURE DE TEMPS FINE

(30) Priority: 09.04.2014 US 201461977374 P; 30.03.2015 US 201514673399
(43) Date of publication of application: 15.02.2017
(73) Proprietor: Qualcomm Incorporated, San Diego, CA 92121-1714 (US)
(72) Inventor: HUANG, Xiaolong, San Diego, California 92121-1714 (US); DE VEGT, Rolf, San Diego, California 92121-1714 (US); ALDANA, Carlos, Horacio, San Diego, California 92121-1714 (US)
(74) Representative: Wegner, Hans
(86) International application number: PCT/US2015/023530
(87) International publication number: WO 2015/157030

(56) References cited:
- WO-A1-2013/076625
- US-A1- 2012 265 913
- US-A1- 2013 070 607

## Description

### CROSS REFERENCES

The present Application for Patent claims priority to U.S. Patent Application no. 14/673,399 by Huang et al., entitled "Wireless Docking/Undocking Using Fine Time Measurement," filed March 30, 2015, and U.S. Provisional Patent Application no. 61/977,374 by Huang et al., entitled "Wireless Docking/Undocking Using Fine Time Measurement," filed April 9, 2014; each of which assigned to the assignee hereof.

### BACKGROUND

### FIELD OF THE DISCLOSURE

The following relates generally to wireless communication, and more specifically to wireless docking centers for electronic devices.

### DESCRIPTION OF THE RELATED ART

Wireless docking centers (WDCs), which are also referred to as docking stations, wireless docking stations, or docks, may be used to wirelessly connect an electronic device such as a computer to various peripheral devices, including monitors, keyboards, mice, printers, scanners, cameras, and the like. The electronic devices connected with the peripheral devices through a WDC may include laptop computers, notebook computers, netbooks, tablets, smartphones, PDAs, and other similar electronic devices. These electronic devices are able to "dock" with a WDC and are thus also referred to as wireless dockees (WDs).

In some cases, the WDs and/or WDCs may support vicinity-based docking/undocking and automatically perform a wireless docking session based on their proximity. According to some conventional techniques, the WD/WDC may determine their proximity by measuring a signal strength (*e*.*g*., received signal strength indication (RSSI)). As the signal strength improves due to the WDs and/or WDCs moving closer to each other, one device may initiate a docking session to build the docking connection. Similarly, as the signal strength degrades due to the WDs and/or WDCs moving away from each other, one device may determine that the other no longer needs access to the peripherals and initiate the docking session to tear down the docking connection. Signal-based proximity detection, however, may suffer from granularity concerns, *e*.*g*., may not provide proximity detection within a desired degree of accuracy necessary for vicinity-based automatic docking/undocking.

WO 2013/076625 A1 relates to a method and apparatus for configuration and control of wireless docking. Configurability and controllability over the initiation of automatic docking for a portable device seeking to dock wirelessly with a docking station in a wireless docking system environment are achieved by the method and system disclosed. The portable device detects the docking station in the wireless docking environment. When the docking station is detected, a communication path is established between the portable device and the docking station. A received signal characteristic level is measured for a received signal. The received signal characteristic level is compared to a determined threshold so that, at least when the received signal level exceeds the determined threshold, docking the portable device to the docking station is able to be completed. The determined threshold is preferably based on signal measurements made for the received signal characteristic level which exceeds a minimum signal strength level required for establishing communication between the portable device and the docking station.

### SUMMARY

The invention relates to a method as defined in claim 1, an apparatus as defined in claim 13 and a computer program as defined in claim 15. Further detailed embodiments are defined in the dependent claims. The described features generally relate to methods, systems, and/ apparatuses for allowing a wireless dockee (WD) and/or a wireless docking center (WDC) to automatically perform a wireless docking session using a fine timing measurement. The automatic, timing-based docking session may be WD initiated and/or WDC initiated. A fine timing measurement procedure may be performed with a wireless device (*e*.*g*., a WDC or WD). A propagation time (e.g., round trip time) may be determined based on timing information exchanged during the fine timing measurement procedure. The propagation time may then be used to determine proximity to the wireless device. A wireless docking session may be performed with the wireless device if the proximity is close enough.

According to a first set of illustrative examples, a method for wireless communication may include performing a fine timing measurement procedure with a wireless device to determine a propagation time for signals exchanged with the wireless device, the propagation time based at least in part on timing information exchanged during the fine timing measurement procedure. The method may also include determining a proximity to the wireless device based on the propagation time. The method may further include performing a wireless docking session with the wireless device based at least in part on the proximity determined using the fine timing measurement procedure.

In certain examples, the method may include determining that the wireless device supports the fine timing measurement procedure and determining that the wireless device supports the wireless docking session using the fine timing measurement procedure. The method may also include sending a fine timing measurement request frame to the wireless device to initiate the fine timing measurement procedure after pre-association discovery. The method may be performed by a wireless docking center and the wireless device may comprise a wireless dockee. A fine timing measurement request frame may be sent to the wireless dockee to initiate the fine timing measurement procedure after the wireless dockee is wirelessly docked with the wireless docking center. A fine timing measurement request frame may be sent to the wireless dockee to initiate the fine timing measurement procedure after pre-association discovery.

In other examples, the method is performed by a wireless dockee and the wireless device comprises a wireless docking center. Determining that the wireless device supports the wireless docking session using the fine timing measurement procedure may include receiving an extended capabilities information element from the wireless device during pre-association discovery indicating the wireless devices supports the fine timing measurement procedure and receiving a service information field during pre-association discovery indicating that the wireless device supports the wireless docking session. The extended capabilities information element may be received in at least one of a beacon, a probe request message, a probe response message, an association request message, or an association response message.

In yet other examples, determining that the wireless device supports the wireless docking session using the fine timing measurement procedure may include receiving a universal plug-n-play (UPnP) argument field during post-discovery indicating that the wireless device supports the wireless docking session using the timing procedure. Determining that the wireless device supports the wireless docking session using the fine timing measurement procedure may include receiving a UPnP action response during post-discovery indicating that the wireless device supports the wireless docking session using the fine timing measurement procedure.

In some examples, determining that the wireless device supports the wireless docking session using the fine timing measurement procedure may include participating in a neighborhood awareness networking (NAN) procedure to receive the indication that the wireless device supports the wireless docking session using the fine timing measurement procedure. The wireless docking session may include at least one of docking or undocking with the wireless device.

According to a second set of illustrative examples, an apparatus for wireless communication may include at least one processor, a memory coupled to the at least one processor, and a docking manager. The docking manager may perform a fine timing measurement procedure with a wireless device to determine a propagation time for signals exchanged with the wireless device, the propagation time based at least in part on timing information exchanged during the fine timing measurement procedure. The docking manager may also determine a proximity to the wireless device based on the propagation time and to perform a wireless docking session with the wireless device based at least in part on the proximity determined using the fine timing measurement procedure.

In some examples, the docking manager may further determine that the wireless device supports the fine timing measurement procedure, and determine that the wireless device supports the wireless docking session using the fine timing measurement procedure. The docking manager may send a fine timing measurement request frame to the wireless device to initiate the fine timing measurement procedure after pre-association discovery. The apparatus may be a wireless dockee and the wireless communication device may be a wireless docking center. In some cases, the apparatus may be a wireless docking center and the wireless device may be a wireless dockee. In these cases, the docking manager in the docking center may send a fine timing measurement request frame to the wireless dockee to initiate the fine timing measurement procedure after the wireless dockee is wirelessly docked with the wireless docking center. Alternatively, the docking manager may send a fine timing measurement request frame to the wireless dockee to initiate the fine timing measurement procedure after pre-association discovery.

Determining that the wireless device supports the wireless docking session using the fine timing measurement procedure may include receiving an extended capabilities information element from the wireless device during pre-association discovery indicating the wireless devices support the fine timing measurement procedure and receiving a service information field during pre-association discovery indicating that the wireless device supports the wireless docking session. The extended capabilities information element may be received in at least one of a beacon, a probe request message, a probe response message, an association request message, or an association response message.

In some examples, determining that the wireless device supports the wireless docking session using the fine timing measurement procedure may include receiving a UPnP argument field during post-discovery indicating that the wireless device supports the wireless docking session using the timing procedure. Determining that the wireless device supports the wireless docking session using the fine timing measurement procedure may include receiving a UPnP action response during post-discovery indicating that the wireless device supports the wireless docking session using the fine timing measurement procedure.

In some examples, determining that the wireless device supports the wireless docking session using the fine timing measurement procedure may include participating in a NAN procedure to receive the indication that the wireless device supports the wireless docking session using the fine timing measurement procedure. The wireless docking session may include at least one of docking or undocking with the wireless device.

According to a third set of illustrative examples, an apparatus for wireless communication may include means for performing a fine timing measurement procedure with a wireless device to determine a propagation time for signals exchanged with the wireless device, the propagation time based at least in part on timing information exchanged during the fine timing measurement procedure. The apparatus may also include means for determining a proximity to the wireless device based on the propagation time and means for performing a wireless docking session with the wireless device based at least in part on the proximity determined using the fine timing measurement procedure.

In certain examples, the means for performing the wireless docking session may further determine that the wireless device supports the fine timing measurement procedure, and determine that the wireless device supports the wireless docking session using the fine timing measurement procedure. The means for performing the fine timing measurement procedure may further send a fine timing measurement request frame to the wireless device to initiate the fine timing measurement procedure after pre-association discovery. In some examples, the apparatus may be a wireless docking center and the wireless device may comprise a wireless dockee. In these cases, the means for performing the fine timing measurement in the wireless docking center may send a fine timing measurement request frame to the wireless dockee to initiate the fine timing measurement procedure after pre-association discovery. A fine timing measurement request frame may be sent to the wireless dockee to initiate the fine timing measurement procedure after the wireless dockee is wirelessly docked with the wireless docking center.

In other examples, the means for performing the wireless docking session may further determine that the wireless device supports the fine timing measurement procedure, and determine that the wireless device supports the wireless docking session using the fine timing measurement procedure. Determining that the wireless device supports the wireless docking session using the fine timing measurement procedure may include receiving an extended capabilities information element from the wireless device during pre-association discovery indicating the wireless devices supports the fine timing measurement procedure and receiving a service information field during pre-association discovery indicating that the wireless device supports the wireless docking session. The extended capabilities information element may be received in at least one of a beacon, a probe request message, a probe response message, an association request message, or an association response message.

In yet other examples, determining that the wireless device supports the wireless docking session using the fine timing measurement procedure may include receiving a UPnP argument field during post-discovery indicating that the wireless device supports the wireless docking session using the timing procedure. Determining that the wireless device supports the wireless docking session using the fine timing measurement procedure may include receiving a UPnP action response during post-discovery indicating that the wireless device supports the wireless docking session using the fine timing measurement procedure.

In some examples, determining that the wireless device supports the wireless docking session using the fine timing measurement procedure may include participating in a NAN procedure to receive the indication that the wireless device supports the wireless docking session using the fine timing measurement procedure. The wireless docking session may include at least one of docking or undocking with the wireless device.

According to a fourth set of illustrative examples, a non-transitory computer-readable medium storing computer-executable code for wireless communication by a wireless communication apparatus may include code executable by a processor to cause the wireless communication apparatus to: perform a fine timing measurement procedure with a wireless device to determine a propagation time for signals exchanged with the wireless device, the propagation time based at least in part on timing information exchanged during the fine timing measurement procedure; determine a proximity to the wireless device based on the propagation time; and perform a wireless docking session with the wireless device based at least in part on the proximity determined using the fine timing measurement procedure. In certain examples, the code may also be executable by the processor to cause the wireless communication apparatus to implement aspects of the method for wireless communication described above with respect to the first set of illustrative examples.

Further scope of the applicability of the described methods and apparatuses will become apparent from the following detailed description, claims, and drawings. The detailed description and specific examples are given by way of illustration only, since various changes and modifications within the scope of the description will become apparent to those skilled in the art.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 shows a diagram of a wireless communication system according to various aspects of the present disclosure;
FIG. 2 shows a call flow diagram of a wireless communication system according to various aspects of the present disclosure;
FIG. 3 shows a call flow diagram illustrating communication in a wireless communication system according to various aspects of the present disclosure;
FIG. 4 shows a call flow diagram illustrating communication in a wireless communication system according to various aspects of the present disclosure;
FIG. 5 shows a block diagram of a device configured for communication in a wireless network according to various aspects of the present disclosure;
FIG. 6 shows a block diagram of a device configured for communication in a wireless network according to various aspects of the present disclosure;
FIG. 7 shows a block diagram of a wireless communication system according to various aspects of the present disclosure; and
FIG. 8 and FIG. 9 show flowcharts of illustrative methods for wireless communications according to various aspects of the present disclosure.

### DETAILED DESCRIPTION

Methods, systems, and apparatuses are described for allowing a wireless dockee and/or a wireless docking center to determine their proximity based on fine timing measurements. The fine timing measurements may provide information associated with the propagation time (or round trip time) for signals exchanged between the devices, which may be used to determine their proximity. If the proximity between the devices is close enough, the devices may initiate a wireless docking session to build a peer-to peer (P2P) docking connection. Similarly, devices already having a P2P docking connection may use the fine timing measurements to determine when one device moves away from the other and, when necessary, tear down the P2P docking connection. The described timing-based proximity detection techniques may be wireless dockee initiated and/or wireless docking center initiated.

The various techniques described herein for a wireless dockee or a wireless docking center to perform a timing-based automatic docking session with respect to wireless local area network (WLAN) or wireless fidelity (Wi-Fi) networks. A WLAN or Wi-Fi network may refer to a network that is based on the protocols described in the various IEEE 802.11 standards (e.g., IEEE 802.11a/g, 802.11n, 802.11ac, 802.11 ad, 802.11ah, etc.), for example. However, the same or similar techniques may also be used in any wireless network (e.g., a cellular network). For example, the same or similar techniques may be used for various wireless communication systems such as cellular wireless systems, Peer-to-Peer wireless communications, ad hoc networks, satellite communications systems, and other systems. The terms "system" and "network" are often used interchangeably. These wireless communication systems may employ a variety of radio communication technologies such as Code Division Multiple Access (CDMA), Time Division Multiple Access (TDMA), Frequency Division Multiple Access (FDMA), Orthogonal FDMA (OFDMA), Single-Carrier FDMA (SC-FDMA), and/or other radio technologies. Generally, wireless communications are conducted according to a standardized implementation of radio communication technologies called a Radio Access Technology (RAT). A wireless communication system or network that implements a Radio Access Technology may be called a Radio Access Network (RAN).

Thus, the following description provides examples, and is not limiting of the scope, applicability, or configuration set forth in the claims. Changes may be made in the function and arrangement of elements discussed without departing from the concepts disclosed herein. Various embodiments may omit, substitute, or add various procedures or components as appropriate. For instance, the methods described may be performed in an order different from that described, and various steps may be added, omitted, or combined. Also, features described with respect to certain embodiments may be combined in other embodiments.

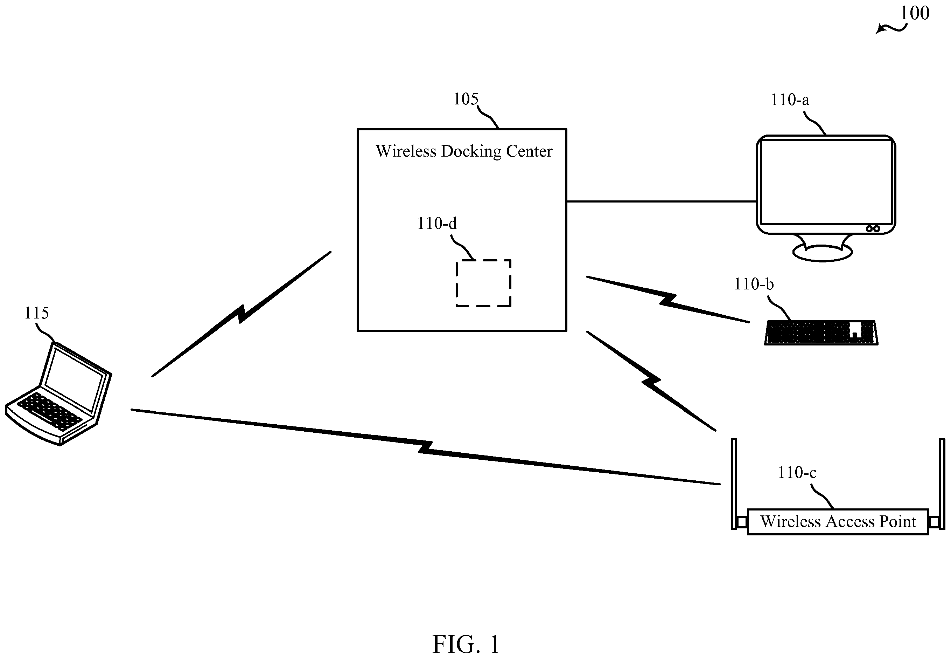

Referring first to **FIG. 1****,** a diagram illustrates a wireless communication system 100 according to various examples. The wireless communication system 100 includes a wireless docking center 105, peripheral devices 110, and a wireless dockee 115. The peripheral devices 110 may be electronic devices that each has at least one peripheral feature. For example, the peripheral device 110-a may be a monitor with a peripheral feature of displaying a graphical user interface. In some examples, the peripheral device 110-b is a keyboard with a peripheral feature of user input. The peripheral device 110-c may be a wireless access point, for example, with peripheral features of providing access to a network. Additionally or alternatively, the wireless docking center 105 may include embedded peripherals, such as the peripheral device 110-d. Some or all of the peripheral devices 110 may be connected to and/or in communication with the wireless docking center 105 by a wired or a wireless connection.

The wireless docking center 105 may support a variety of known and/or common peripheral function protocols (PFPs). For example, the wireless docking center 105 may support Miracast, universal serial bus (USB), IEEE 802.11ad ("WiGig"), Universal Plug and Play (UPnP), and/or Wi-Fi Direct Services Application Service Platform (WFDS ASP). Some of the peripheral devices 110 may employ such known PFPs, and the wireless docking center 105 may thus readily transmit discovery information related to these peripheral devices 110 to the wireless dockee 115.

The wireless dockee 115 may wirelessly connect to the wireless docking center 105, for example, utilizing Wi-Fi. The wireless dockee 115 may seek out or connect to the wireless docking center 105 based on the peripheral features available via the wireless docking center 105. Thus, the wireless docking center 105 may advertise the peripheral features, and thus the peripheral devices, available to a wireless dockee 115. Once connected to (*e*.*g*., docked) to the wireless docking center 105, the wireless dockee 115 may exploit the peripheral features available through the wireless docking center 105.

The wireless dockee 115 and the wireless docking center 105 may form a Wi-Fi P2P link, for example, when connected. The wireless dockee 115 and the wireless docking center 105 may each include a docking manager system implementing docking manager protocols to manage the docking session (from discovery, to docking, to using PFs, to undocking). At the wireless docking center 105, the docking manager system enables the wireless docking center 105 to advertise a docking service, including peripheral features (PFs) it manages and capabilities required to utilize its PFs, and to enable the wireless dockee 115 to connect to the wireless docking center 105. At the wireless dockee 115, the docking manager system enables the wireless dockee 115 to seek the docking service at the wireless docking center 105, including the PFs the wireless docking center 105 manages and the capabilities required to utilize the PFs, and to wireless connect to the wireless docking center 105. The wireless docking center 105 and the wireless dockee 115 may be configured to support automatic docking/undocking, *i*.*e*., without requiring user intervention to setup or tear down the P2P link.

A docking session may include a pre-association discovery phase, a post-association discovery phase, a docking session setup phase, a docking management operation phase, a PF service session setup phase, and a docking session teardown phase. The wireless dockee 115 and the wireless docking center 105 may each determine whether the other is configured to support a fine timing measurement procedure and, also, support an automatic docking session procedure. This may be determined during pre-association discovery and/or post-association discovery. If both devices are so configured, one may initiate the fine timing measurement procedure and, based on a propagation delay associated with the fine timing measurement procedure, determine its proximity to the other device. If the devices are near each other, they may automatically perform a docking procedure to establish a P2P link.

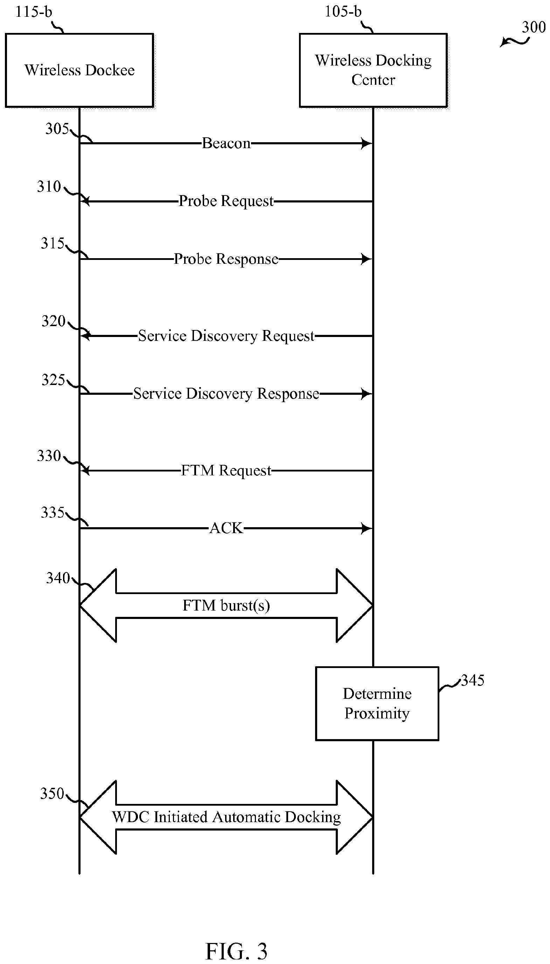

In some examples, the determination of support for the fine timing measurement procedure and the automatic docking session may be a component of a neighborhood awareness networking (NAN) procedure. Generally, the NAN procedure may be a low power consumption mode where a wireless dockee 115 and/or a wireless docking center 105 may not advertise aspects of the services it provides until after pre-association. Additional details of the timing-based automatic docking techniques are described below with respect to FIGs. 3-9.

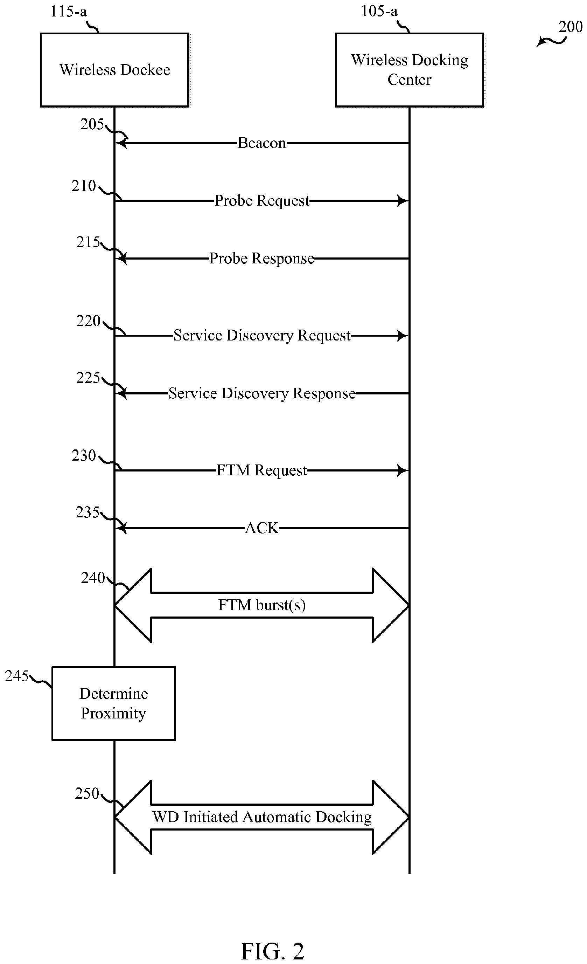

**FIG. 2** is a call flow diagram 200 illustrating communication in a wireless communication system according to various examples. The diagram 200 may illustrate aspects of the wireless communication system 100 described with reference to FIG. 1. The diagram 200 includes a wireless dockee 115-a and a wireless docking center 105-a. Each of these may be examples of corresponding devices of wireless communication system 100. Generally, the diagram 200 illustrates a wireless dockee 115-a initiated docking session based on proximity determination using a fine timing measurement procedure.

The wireless docking center 105-a may send a beacon 205 to the wireless dockee 115-a. The beacon may advertise that the wireless docking center 105-a supports docking services. In some cases, the beacon 205 may include information elements, *e*.*g*., an extended capabilities information element, indicating that the wireless docking center 105-a supports a fine timing measurement procedure. The wireless dockee 115-a may respond by sending a probe request 210 to the wireless docking center 105-a. The wireless dockee 115-a may include an information element, *e*.*g*., a service information field information element, indicating that it supports a fine timing measurement procedure. The wireless docking center 105-a may respond by sending a probe response 215 to the wireless dockee 115-a. The probe response 215 may, additionally or alternatively, include information indicating that the wireless docking center 105-a supports a fine timing measurement procedure.

The wireless dockee 115-a may send a service discovery request 220, *e.g.,* an association request message, to the wireless docking center 105-a. The service discovery request may include information indicating whether the wireless dockee 115-a supports an automatic docking session (*e*.*g*., docking and/or undocking). The service discovery request 220 may also include other information, *e*.*g*., information indicating the desired peripheral features that the wireless dockee 115-a is seeking. The wireless docking center 105-a may respond by sending a service discovery response 225, *e*.*g*., an association response message. The service discovery response 225 may include information indicating whether the wireless docking center 105-a supports an automatic docking session. The service discovery response 225 may also include information associated with the peripheral features the wireless docking center 105-a is capable of providing to the wireless dockee 115-a. Generally, the exchanges 205-225 may be considered components of the pre-association phase. If the wireless docking center 105-a supports the peripheral features the wireless dockee 115-a desires and supports the automatic timing-based docking session, the wireless dockee 115-a may proceed to a docking session setup phase.

The wireless dockee 115-a may initiate a fine timing measurement procedure by sending a fine timing measurement (FTM) request 230, *e*.*g*., a fine timing measurement request frame. The wireless docking center 105-a may respond with an acknowledgment (ACK) 235. The wireless dockee 115-a and the wireless docking center 105-a may exchange fine timing measurement burst(s) 240 during the fine timing measurement procedure. For example, the wireless dockee 115-a may request the wireless docking center 105-a to send fine timing measurement frame(s) that include a specific set of timing information. The wireless dockee 115-a may, based on the received timing information from the wireless docking center 105-a and local timing information at the wireless dockee 115-a, measure the round trip time (*i*.*e*., the propagation time) for signals exchanged during the fine timing measurement procedure. Based on the measured round trip time (or propagation time), the wireless dockee 115-a may calculate its proximity 245 to the wireless docking center 105-a. If the wireless dockee 115-a determines it is proximate enough, it may initiate an automatic docking session 250 to establish a P2P connection with the wireless docking center 105-a.

In some cases, determining the proximity based on the propagation times may enable an estimation error smaller than an estimation error associated with signal strength-based proximity calculations. For example, the propagation-based proximity calculations may have an estimation error of less than 2 meters.

**FIG. 3** is a call flow diagram 300 illustrating communications in a wireless communication system according to various examples. The diagram 300 may illustrate aspects of the wireless communication system 100 described with reference to FIG. 1. The diagram 300 includes a wireless dockee 115-b and a wireless docking center 105-b. Each of these may be examples of corresponding devices of wireless communication system 100. Generally, the diagram 300 illustrates a wireless docking center 105-b initiated docking session based on proximity determination using a fine timing measurement procedure.

Generally, the diagram 300 illustrates a similar, but reversed, pre-association discovery phase procedure as is outlined in FIG. 2. For example, the wireless dockee 115-b may send a beacon 305 to the wireless docking center 105-b to advertise that the wireless dockee 115-b supports docking services and may include information elements indicating that the wireless dockee 115-b supports the fine timing measurement procedure. The wireless docking center 105-b may respond by sending a probe request 310 to the wireless dockee 115-b that may include an indication, *e*.*g*., an extended capabilities information element, that it supports a fine timing measurement procedure. The wireless dockee 115-b may respond by sending a probe response 315 to the wireless docking center 105-b that, additionally or alternatively, indicates that the wireless dockee 115-b supports a fine timing measurement procedure.

Further, the wireless docking center 105-b may send a service discovery request 320 to the wireless dockee 115-b that indicates whether the wireless docking center 105-b supports an automatic docking session (*e*.*g*., docking and/or undocking). The wireless dockee 115-b may respond by sending a service discovery response 325 that indicates whether the wireless dockee 115-b supports an automatic docking session.

Thus, the wireless docking center 105-b may determine that the wireless dockee 115-b supports timing-based automatic docking/undocking during the pre-association discovery phase and, accordingly, initiate a fine timing measurement procedure by sending a fine timing measurement (FTM) request 330. The wireless dockee 115-b may respond with an acknowledgment 335. The wireless docking center 105-b and the wireless dockee 115-b may exchange fine timing measurement burst(s) 340 during the fine timing measurement procedure. Based on the measured round trip time (or propagation time), the wireless docking center 105-b may calculate its proximity 345 to the wireless dockee 115-b. If the wireless docking center 105-b determines it is proximate enough, it may initiate an automatic docking session 350 to establish the P2P connection with the wireless dockee 115-b. Therefore, in the diagram 300 the wireless docking center 105-b may calculate its proximity to the wireless dockee 115-b using the fine timing measurement procedure and, if appropriate, automatically dock with the wireless dockee 115-b.

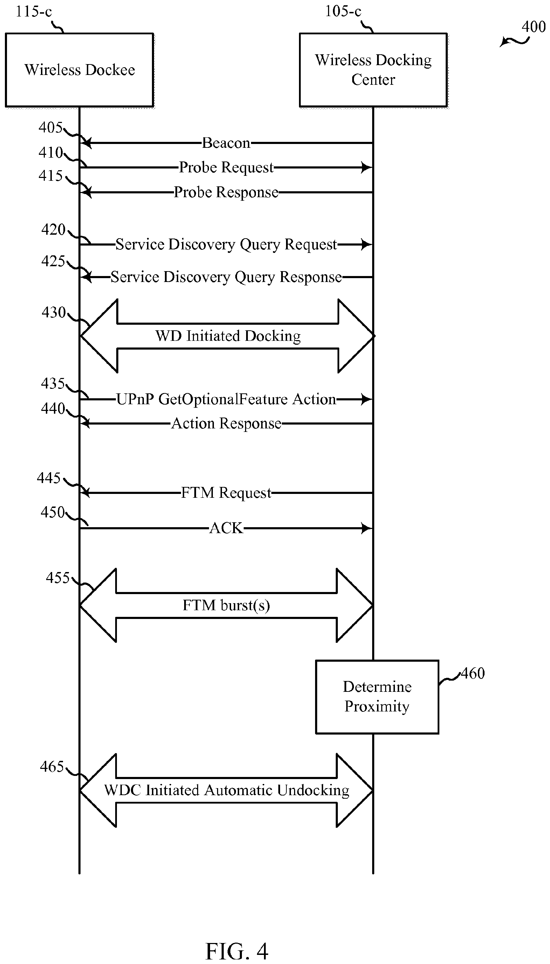

**FIG. 4** is a call flow diagram 400 illustrating communication in a wireless communication system according to various examples. The diagram 400 may illustrate aspects of the wireless communication system 100 described with reference to FIG. 1. The diagram 400 includes a wireless dockee 115-c and a wireless docking center 105-c. Each of these may be examples of corresponding devices of wireless communication system 100. Generally, the diagram 400 illustrates a wireless dockee 115-c initiated docking session (*e*.*g*., docking) and, then a wireless docking center 105-c initiated docking session that results in undocking based on proximity determination using the fine timing measurement procedure.

The wireless docking center 105-c may send a beacon 405 to the wireless dockee 115-c indicating that it supports a fine timing measurement procedure. The wireless dockee 115-c may respond by sending a probe request 410 indicating that is supports docking services as well as the fine timing measurement procedure. For instance, the probe request 410 may include an extended capabilities information element to indicate its support. The wireless docking center 105-c may respond by sending a probe response 415 indicating that it supports docking services and, additionally or alternatively, the fine timing measurement procedure. The wireless dockee 115-c may send a service discovery request 420 to the wireless docking center 105-c requesting information associated with the peripheral features that the wireless dockee 115-c desires. The wireless docking center 105-c may respond by sending a service discovery response 425 that indicates what peripheral features the wireless docking center 105-c may provide. In the pre-association discovery procedure of diagram 400, the wireless dockee 115-c may determine that the wireless docking center 105-c supports a fine timing measurement procedure, but does not support automatic docking sessions. Accordingly, the wireless dockee 115-c may initiate a docking session 430 with the wireless docking center 105-c to establish the P2P link. The docking session 430 may utilize existing docking techniques.

Once connected, the wireless dockee 115-c may send a Universal Plug and Play (UPnP) based post-association discovery message (*e*.*g*., UPnP GetOptionalFeature Action message 435) during the docking management phase to discover what optional features the wireless docking center 105-c supports. In some cases, the wireless dockee 115-c may include an indication in the post-association discovery message, *e*.*g*., an argument field, that it supports automatic docking sessions, *e*.*g*., as an information element. The wireless docking center 105-c may respond with an action response 440, *e*.*g*., without output argument 'OptionalFeatureList' containing the list of optional features supported by the wireless docking center 105-c. In some cases, the wireless docking center 105-c may include information elements in the response 440 indicating that it supports automatic docking session.

Thus, the wireless docking center 105-c may determine that the wireless dockee 115-c supports a fine timing measurement procedure during the pre-association discovery phase and timing-based automatic docking/undocking during the post-association discovery phase and, accordingly, initiates a fine timing measurement procedure by sending a fine timing measurement (FTM) request 445. The wireless dockee 115-c may respond with an acknowledgment 450. The wireless docking center 105-c and the wireless dockee 115-c may exchange fine timing measurement burst(s) 455 during the fine timing measurement procedure. Based on the measured round trip time (or propagation time), the wireless docking center 105-c may calculate its proximity 460 to the wireless dockee 115-c. If the wireless docking center 105-c determines it is no longer proximate enough (*e*.*g*., the wireless dockee 115-c is moving away), it may initiate an automatic undocking session 465 to tear down the P2P connection with the wireless dockee 115-c (*i*.*e*., to undock). Therefore, in the diagram 400 the wireless docking center 105-c may calculate its proximity to the wireless dockee 115-c using the fine timing measurement procedure and, if appropriate, automatically undock with the wireless dockee 115-c.

It can be appreciated that in the diagrams 200-400, the wireless dockee 115 and/or the wireless docking center 105 may use the timing-based automatic docking session for subsequent docking events (*e*.*g*., docking and/or undocking). That is, once the devices discover that the other device supports timing-based automatic docking sessions, they may default to such techniques to determine whether they are close enough for docking decision purposes.

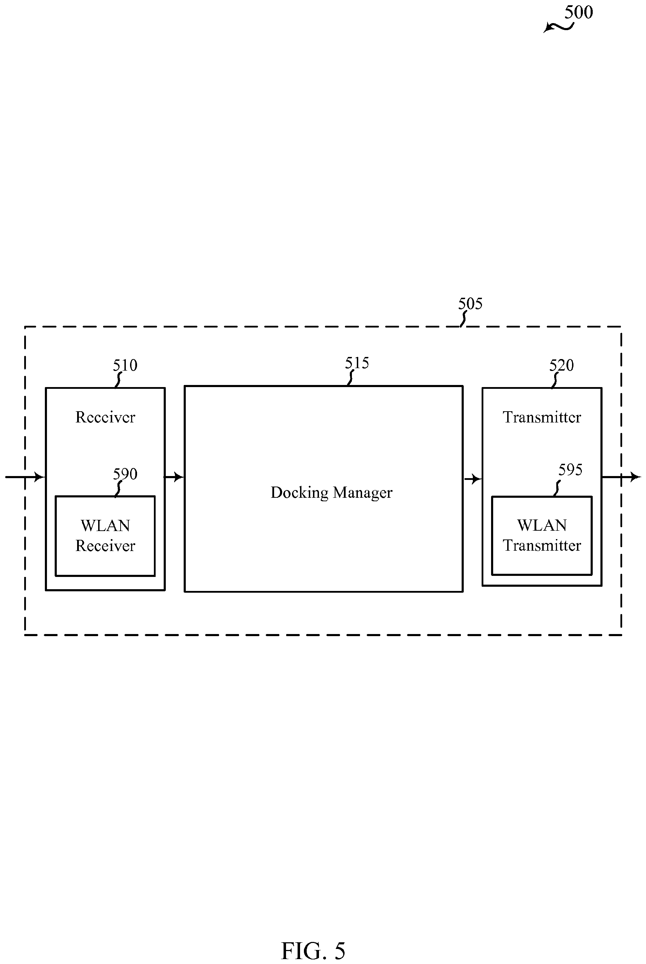

**FIG. 5** shows a block diagram 500 of an apparatus 505 for wireless communication, in accordance with various aspects of the present disclosure. In some examples, the apparatus 505 may be an example of aspects of the wireless dockee 115 described with reference to FIG. 1, 2, 3, or 4. In other examples, the apparatus 505 may be an example of aspects of the wireless docking center 105 described with reference to FIG. 1, 2, 3, or 4.

The apparatus 505 may be an example of a wireless dockee 115 to determine whether a wireless device (*e*.*g*., a wireless docking center 105) supports timing-based automatic docking sessions and, if so, initiate the fine timing measurement procedure/docking session accordingly. In other examples, the apparatus 505 may be an example of a wireless docking center 105 to determine whether a wireless device (*e*.*g*., a wireless dockee 115) supports timing-based automatic docking sessions and, if so, initiate the fine timing measurement procedure/docking session accordingly.

The apparatus 505 may also be a processor. The apparatus 505 may include a receiver 510, a docking manager 515, and/or a transmitter 520. Each of these components may be in communication with each other.

The components of the apparatus 505 may, individually or collectively, be implemented using at least one application-specific integrated circuit (ASIC) adapted to perform some or all of the applicable functions in hardware. Alternatively, the functions may be performed by other processing units (or cores), on at least one integrated circuit. In other examples, other types of integrated circuits may be used (*e*.*g*., Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by general or application-specific processors.

In some examples, the receiver 510 may be or include an radio frequency (RF) receiver such as a WLAN receiver 590. The receiver 510 may also include other receivers, such as a Wi-Fi receiver and/or a wireless wide area network (WWAN) receiver (*e*.*g*., a cellular receiver). The receiver 510 may be used to receive various types of data and/or control signals (*i*.*e*., transmissions) over communication links (*e*.*g*., physical channels) of a wireless communication system such as the wireless communication system 100 described with reference to FIG. 1. For example, the receiver 510 may be used to receive messages exchanged during a fine timing measurement procedure and/or an automatic docking session based on the fine timing measurement procedure.

In some examples, the transmitter 520 may be or include an RF transmitter such as a WLAN transmitter 595. The transmitter 520 may also include other transmitters, such as a Wi-Fi transmitter and/or a WWAN transmitter (*e*.*g*., a cellular transmitter). The transmitter 520 may be used to transmit various types of data and/or control signals (*i*.*e*., transmissions) over communication links (*e*.*g*., physical channels) of a wireless communication system such as the wireless communication system 100 described with reference to FIG. 1. For example, the transmitter 520 may be used to transmit information associated with the apparatus 505 supporting timing-based automatic docking sessions.

In some examples, the docking manager 515 may be an example of a module that manages the functions described with reference to FIG. 1, 2, 3, or 4. In some examples, the docking manager 515 may be used to manage a timing-based automatic docking session. The docking manager 515 may perform a fine timing measurement procedure with a wireless device (*e*.*g*., a wireless dockee 115 or a wireless docking center 105). The fine timing measurement procedure may include exchanging timing information between the docking manager 515 and the wireless device via the receiver 510 and/or the transmitter 520. The timing information may be used by the docking manager 515 to determine propagation times for signals exchanged with the wireless device. Based on the propagation times, the docking manager 515 may determine or calculate a proximity to the wireless device. The docking manager 515 may perform a wireless docking session with the wireless device based on the proximity determined using the propagation times.

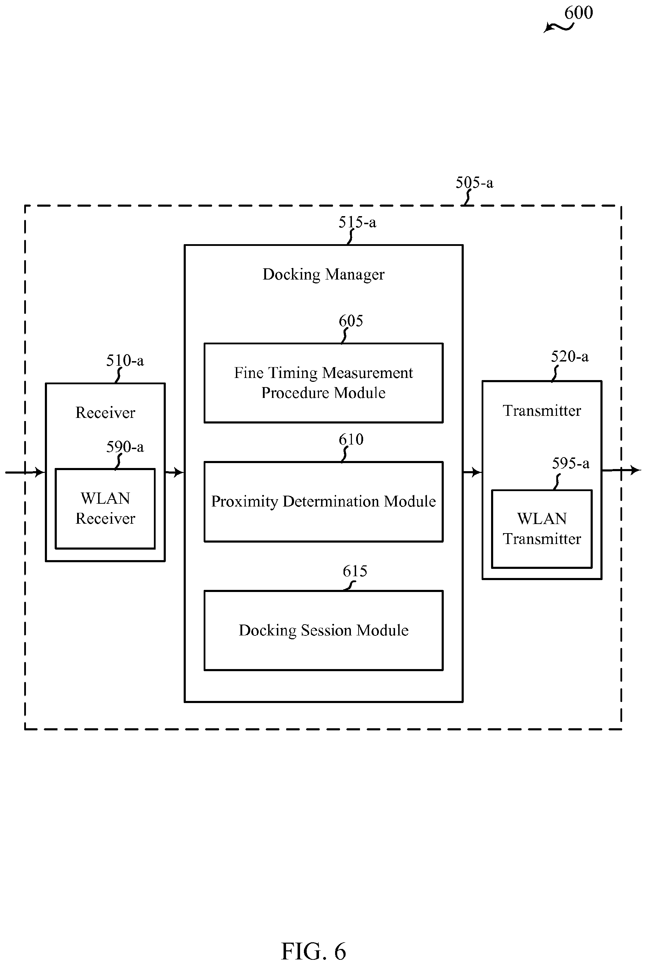

**FIG. 6** shows a block diagram 600 of an apparatus 505-a for wireless communication, in accordance with various aspects of the present disclosure. In some examples, the apparatus 505-a may be an example of aspects of the wireless dockee 115 described with reference to FIG. 1, 2, 3, or 4. In further examples, the apparatus 505-a may be an example of aspects of the wireless docking center 105 described with reference to FIG. 1, 2, 3, or 4.

The apparatus 505-a may be an example of a wireless dockee 115 to determine whether a wireless device *(e.g.,* a wireless docking center 105) supports timing-based automatic docking sessions and, if so, initiate the fine timing measurement procedure/docking session accordingly. In other examples, the apparatus 505-a may be an example of a wireless docking center 105 to determine whether a wireless device *(e.g.,* a wireless dockee 115) supports timing-based automatic docking sessions and, if so, initiate the fine timing measurement procedure/docking session accordingly.

The apparatus 505-a may also be a processor. The apparatus 505-a may include a receiver 510-a, a docking manager 515-a, and/or a transmitter 520-a. Each of these components may be in communication with each other.

The components of the apparatus 505-a may, individually or collectively, be implemented using at least one ASIC adapted to perform some or all of the applicable functions in hardware. Alternatively, the functions may be performed by other processing units (or cores), on at least one integrated circuit. In other examples, other types of integrated circuits may be used (e.g., Structured/Platform ASICs, FPGAs, and other Semi-Custom ICs), which may be programmed in any manner known in the art. The functions of each unit may also be implemented, in whole or in part, with instructions embodied in a memory, formatted to be executed by general or application-specific processors.

In some examples, the receiver 510-a may be or include an RF receiver such as a WLAN receiver 590-a. The receiver 510-a may also include other receivers, such as a Wi-Fi receiver and/or a WWAN receiver (e.g., a cellular receiver). The receiver 510-a may be used to receive various types of data and/or control signals *(i.e.,* transmissions) over communication links (*e*.*g*., physical channels) of a wireless communication system such as the wireless communication system 100 described with reference to FIG. 1. For example, the receiver 510-a may be used to receive messages exchanged during a fine timing measurement procedure and/or an automatic docking session based on the fine timing measurement procedure.

In some examples, the transmitter 520-a may be or include an RF transmitter such as a WLAN transmitter 595-a. The transmitter 520-a may also include other transmitters, such as a Wi-Fi transmitter and/or a WWAN transmitter (e.g., a cellular transmitter). The transmitter 520-a may be used to transmit various types of data and/or control signals (*i*.*e*., transmissions) over communication links (e.g., physical channels) of a wireless communication system such as the wireless communication system 100 described with reference to FIG. 1. For example, the transmitter 520-a may be used to transmit information associated with the apparatus 505-a supporting timing-based automatic docking sessions.

In some examples, the docking manager 515-a may be an example of a module that manages the functions described with reference to FIG. 1, 2, 3, or 4. The docking manager 515-a may include a fine timing measurement procedure module 605, a proximity determination module 610, and a docking session module 615. Generally, the docking manager 515-a may be used to manage a timing-based automatic docking session.

In some examples, the fine timing measurement procedure module 605 may perform a fine timing measurement procedure. The fine timing measurement procedure may be between the apparatus 505-a and a wireless device *(e.g.,* a wireless dockee 115 and/or a wireless docking center 105). The fine timing measurement procedure may include the exchange of timing message frames that include timing information. The fine timing measurement procedure module 605 may receive timing message frames from the wireless device via the receiver 510-a and cause timing message frames to be transmitted to the wireless device via the transmitter 520-a. The fine timing measurement procedure module 605 may determine a propagation time for signals exchanged during the fine timing measurement procedure, e.g., the time required for signals to propagate from the apparatus 505-a to the wireless device, and/or vice versa.

In some examples, the proximity determination module 610 may determine a proximity of the wireless device, *i*.*e*., how close the apparatus 505-a is to the wireless device. The proximity determination module 610 may determine the proximity based on the propagation time determined during the fine timing measurement procedure. In some aspects, the proximity determination module 610 may determine the proximity using the propagation times in conjunction with the known speed of wireless signals.

In some examples, the docking session module 615 may perform a docking session with the wireless device. The docking session may be performed based on the proximity determined based on the propagation times. The docking session module 615 may determine, based on the proximity of the apparatus 505-a to the wireless device, whether the devices are close enough to maintain a wireless dock communications link (e.g., within range). If the proximity indicates that the devices are close enough, the docking session module 615 may perform the docking session by initiating a docking session setup procedure. The docking session setup procedure may establish the P2P link by exchanging messages, e.g., P2P Provision Discovery Request and Response, P2P group formation/joining, etc. The docking session module 615 may further perform docking management operations to maintain the P2P link as well as docking session teardown operations to end the docking session.

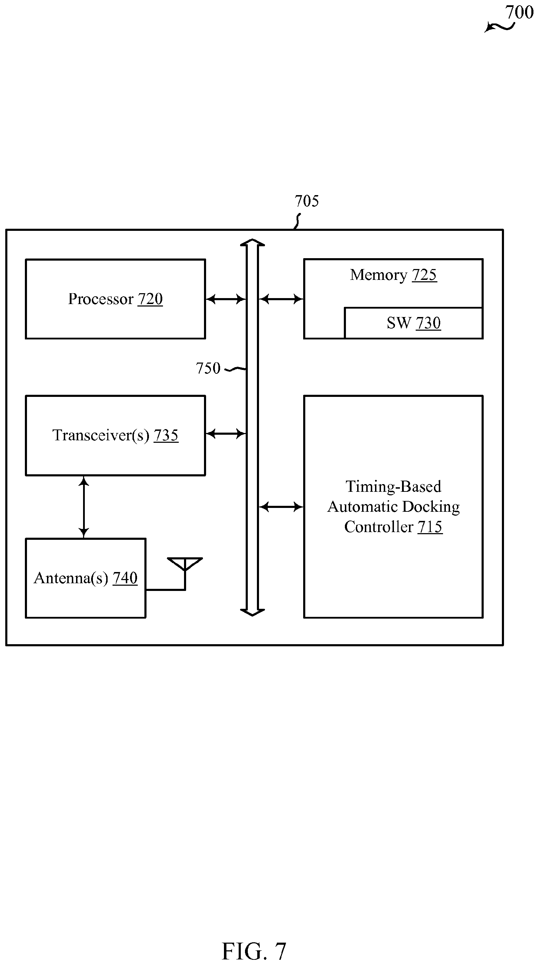

**FIG.** 7 shows a block diagram 700 of a wireless device 705 *(e.g.,* a wireless dockee 115 and/or a wireless docking center 105) for wireless communication, in accordance with various aspects of the present disclosure. The wireless device 705 may have various configurations and may be or be part of a computer (e.g., a laptop computer, netbook computer, tablet computer, etc.), a cellular telephone, a personal digital assistant (PDA), a digital video recorder (DVR), an internet appliance, a gaming console, an e-reader, etc. The wireless device 705 may in some cases have an internal power supply (not shown), such as a small battery, to facilitate mobile operation. In some examples, the wireless device 705 may be an example of aspects of the wireless docking center 105 or the wireless dockee 115 described with reference to FIG. 1, 2, 3, or 4, and/or aspects of the apparatuses 505 or 505-a described with reference to FIG. 5 or 6. The wireless device 705 may implement at least some of the features and functions described with reference to FIG. 1, 2, 3, 4, 5, or 6. The wireless device 705 may communicate with wireless docking centers 105 and/or with wireless dockees 115 described with reference to FIG. 1, 2, 3, or 4.

The wireless device 705 may include a processor 720, a memory 725 (including software code 730), at least one transceiver (represented by transceiver(s) 735), at least one antenna (represented by antenna(s) 740), and/or a timing-based automatic docking controller 715. Each of these components may be in communication with each other, directly or indirectly, over at least one bus 750.

The transceiver(s) 735, in conjunction with antenna(s) 740, may facilitate wireless communication with wireless docking centers, wireless dockees, and/or other apparatuses. Wireless communication with a wireless docking center and/or a wireless dockees, as described above, may be managed using the timing-based automatic docking controller 715.

The processor 720 may include an intelligent hardware device, *e.g.,* a central processing unit (CPU), a microcontroller, an ASIC, etc. The processor 720 may process information received through the transceiver(s) 735 and/or process information to be sent to the transceiver(s) 735 for transmission through the antenna(s) 740. The processor 720 may handle, alone or in connection with the timing-based automatic docking controller 715, various aspects of communicating over a wireless and/or wireline communication system.

The memory 725 may include random access memory (RAM) and/or read-only memory (ROM). The memory 725 may store computer-readable, computer-executable software (SW) code 730 containing instructions that are configured to, when executed, cause the processor 720 to perform various functions described herein for communicating over a wireless communication system. Alternatively, the software code 730 may not be directly executable by the processor 720 but be configured to cause the wireless device 705 (*e*.*g*., when compiled and executed) to perform various functions described herein.

The timing-based automatic docking controller 715 may be an example of aspects of the docking manager 515 described with reference to FIG. 5 or 6. The timing-based automatic docking controller 715 may be used to manage the wireless connection(s) of the wireless device 705 as they relate to performing a fine timing measurement procedure to determine propagation times for signals communicated between the wireless device 705 and another wireless device, calculate the proximity to the other wireless device based on the propagation times, and perform an wireless docking session with the other wireless device based on the proximity. In some examples, the timing-based automatic docking controller 715, or portions of same, may include a processor, and/or some or all of the functionality of the timing-based automatic docking controller 715 may be performed by the processor 720 and/or in connection with the processor 720.

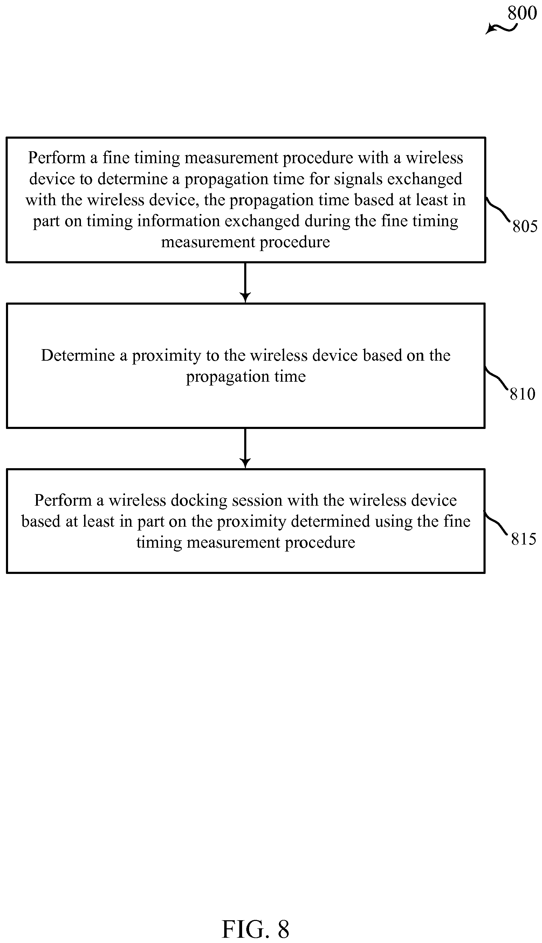

**FIG. 8** shows a flowchart of an illustrative method 800 for wireless communications, in accordance with various aspects of the present disclosure. The method 800 may be implemented by at least one of the wireless dockees 115, the wireless docking centers 105 described above with reference to FIG. 1, 2, 3, or 4 and/or apparatuses 505 or 705 of FIG. 5, 6, or 7. In some examples, a wireless dockee such as one of the wireless dockees 115, a wireless docking center 105, or an apparatus such as apparatus 505 or 705 may execute sets of codes to control the functional elements of the wireless dockee, wireless docking center, or apparatus to perform the functions described below.

At block 805, the method 800 may perform a fine timing measurement procedure with a wireless device to determine a propagation time for signals exchanged with the wireless device, the propagation time based at least in part on timing information exchanged during the fine timing measurement procedure. For example, the fine timing measurement procedure may be performed at 230-240, 330-340, 445-455, as described above with reference to FIG. 2, 3, or 4, respectively.

At block 810, the method 800 may include determining a proximity to the wireless device based on the propagation time. For example, the proximity may be determined at 245, 345, 460, as described above with reference to FIG. 2, 3, or 4, respectively.

At block 815, the method 800 may include performing a wireless docking session with the wireless device based at least in part on the proximity determined using the fine timing measurement procedure. For example, the wireless docking session may be at 250, 350, 465, as described above with reference to FIG. 2, 3 or 4, respectively.

In some examples, the operations at blocks 805, 810 or 815 may be performed using the docking manager 515 or the timing-based automatic docking controller 715 described with reference to FIG. 5, 6 or 7. Nevertheless, it should be noted that the method 800 is just one implementation and that the operations of the method 800 may be rearranged or otherwise modified such that other implementations are possible.

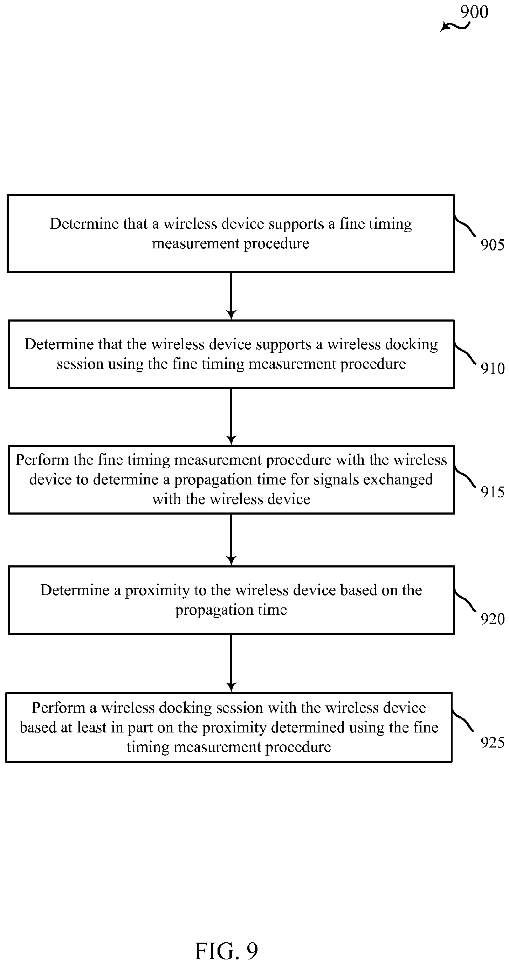

**FIG. 9** shows a flowchart of an illustrative method 900 for wireless communications, in accordance with various aspects of the present disclosure. The method 900 may be implemented by at least one of the wireless dockees 115 or the wireless docking centers 105 described above with reference to FIG. 1, 2, 3, or 4 and/or apparatuses 505 or 705 of FIG. 5, 6, or 7. In some examples, a wireless dockee such as one of the wireless dockees 115, a wireless docking center such as one of the wireless docking centers 105, or an apparatus such as apparatus 505 or 705 may execute sets of codes to control the functional elements of the wireless dockee, wireless docking center, or apparatus to perform the functions described below.

At block 905, the method 900 may determine that a wireless device supports a fine timing measurement procedure. The determination of support for the fine timing measurement procedure may occur during a pre-association discover phase and/or a post-association discovery phase. For example, the determination of support for the fine timing measurement procedure may be at 205 or 215, 305 or 315, 405 or 415, as described above with reference to FIG. 2, 3, or 4, respectively.

At block 910, the method 900 may determine that the wireless device support a wireless docking session using the fine timing measurement procedure. The determination of support for the wireless docking session using the fine timing measurement procedure may include determining that the wireless device supports an automatic docking session. For example, the determination may be at 225, 325, 440, as described above with reference to FIG. 2, 3, or 4, respectively.

At block 915, the method 900 may perform a fine timing measurement procedure with a wireless device to determine a propagation time for signals exchanged with the wireless device, the propagation time based at least in part on timing information exchanged during the fine timing measurement procedure. For example, the fine timing measurement procedure may be performed at 230-240, 330-340, 445-455, as described above with reference to FIG. 2, 3, or 4, respectively.

At block 920, the method 900 may include determining a proximity to the wireless device based on the propagation time. For example, the proximity may be determined at 245, 345, 460, as described above with reference to FIG. 2, 3, or 4, respectively.

At block 925, the method 900 may include performing a wireless docking session with the wireless device based at least in part on the proximity determined using the fine timing measurement procedure. For example, the wireless docking session may be at 250, 350, 465, as described above with reference to FIG. 2, 3 or 4, respectively.

In some examples, the operations at blocks 905, 910, 915, 920, or 925 may be performed using the docking manager 515 or the timing-based automatic docking controller 715 described with reference to FIG. 5, 6 or 7. Nevertheless, it should be noted that the method 900 is just one implementation and that the operations of the method 900 may be rearranged or otherwise modified such that other implementations are possible.

The detailed description set forth above in connection with the appended drawings describes exemplary embodiments and does not represent the only embodiments that may be implemented or that are within the scope of the claims. The term "exemplary" used throughout this description means "serving as an example, instance, or illustration," and not "preferred" or "advantageous over other embodiments." The detailed description includes specific details for the purpose of providing an understanding of the described techniques. These techniques, however, may be practiced without these specific details. In some instances, well-known structures and devices are shown in block diagram form to avoid obscuring the concepts of the described embodiments.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of' indicates a disjunctive list such that, for example, a list of "at least one of A, B, or C" means A or B or C or AB or AC or BC or ABC (*i*.*e*., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, electrically erasable programmable ROM (EEPROM), compact disk ROM (CD-ROM) or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Throughout this disclosure the term "example" or "exemplary" indicates an example or instance and does not imply or require any preference for the noted example. Thus, the disclosure is not to be limited to the examples and designs described herein but is to be accorded the broadest scope consistent with the principles and novel features disclosed herein.

## Claims

1. A method (900) for wireless communication, comprising:
determining (910) that a wireless device supports an automatic wireless docking session using a fine timing measurement procedure;
performing (915) based on a positive determination, the fine timing measurement procedure with the wireless device to determine a propagation time for signals exchanged with the wireless device, the propagation time based at least in part on timing information exchanged during the fine timing measurement procedure;
determining (920) a proximity to the wireless device based on the propagation time; and
performing (925) the automatic wireless docking session with the wireless device based at least in part on the proximity determined using the fine timing measurement procedure.

2. The method of claim 1, further comprising:
sending a fine timing measurement request frame to the wireless device to initiate the fine timing measurement procedure after pre-association discovery.

3. The method of claim 1, wherein the method is performed by a wireless docking center and the wireless device comprises a wireless dockee.

4. The method of claim 3, further comprising:
sending a fine timing measurement request frame to the wireless dockee to initiate the fine timing measurement procedure after the wireless dockee is wirelessly docked with the wireless docking center.

5. The method of claim 3, further comprising:
sending a fine timing measurement request frame to the wireless dockee to initiate the fine timing measurement procedure after pre-association discovery.

6. The method of claim 1, wherein the method is performed by a wireless dockee and the wireless device comprises a wireless docking center.

7. The method of claim 1, wherein determining that the wireless device supports the automatic wireless docking session using the fine timing measurement procedure comprises:
receiving an extended capabilities information element from the wireless device during pre-association discovery indicating the wireless device supports the fine timing measurement procedure; and
receiving a service information field during pre-association discovery indicating that the wireless device supports the automatic wireless docking session.

8. The method of claim 7, wherein the extended capabilities information element is received in at least a beacon, or a probe request message, or a probe response message, or an association request message, or an association response message, or a combination thereof.

9. The method of claim 1, wherein determining that the wireless device supports the automatic wireless docking session using the fine timing measurement procedure comprises:
receiving a universal plug-n-play, UPnP, argument field during post-association discovery indicating that the wireless device supports the automatic wireless docking session using the fine timing measurement procedure.

10. The method of claim 1, wherein determining that the wireless device supports the automatic wireless docking session using the fine timing measurement procedure comprises:
receiving a universal plug-n-play, UPnP, action response during post-association discovery indicating that the wireless device supports the automatic wireless docking session using the fine timing measurement procedure.

11. The method of claim 1, wherein determining that the wireless device supports the automatic wireless docking session using the fine timing measurement procedure comprises:
participating in a neighborhood awareness networking, NAN, procedure to receive an indication that the wireless device supports the automatic wireless docking session using the fine timing measurement procedure.

12. The method of claim 1, wherein the automatic wireless docking session comprises at least docking with the wireless device or undocking with the wireless device.

13. An apparatus for wireless communication, comprising:
means for determining (910) that a wireless device supports an automatic wireless docking session using a fine timing measurement procedure;
means for performing (915), based on a positive determination, the fine timing measurement procedure with the wireless device to determine a propagation time for signals exchanged with the wireless device, the propagation time based at least in part on timing information exchanged during the fine timing measurement procedure;
means for determining (920) a proximity to the wireless device based on the propagation time; and
means for performing (925) the automatic wireless docking session with the wireless device based at least in part on the proximity determined using the fine timing measurement procedure.

14. The apparatus of claim 13, wherein the means for performing the fine timing measurement procedure further comprises:
means for sending a fine timing measurement request frame to the wireless device to initiate the fine timing measurement procedure after pre-association discovery.

15. Computer program comprising instructions which, when executed, cause a computer to perform a method according to any one of claims 1 - 12.

## Patentansprüche

1. Verfahren (900) zur drahtlosen Kommunikation, beinhaltend:
Feststellen (910), dass ein drahtloses Gerät eine automatische drahtlose Dockingsitzung unter Benutzung einer Fein-Timing-Messprozedur unterstützt;
Durchführen (915), basierend auf einer positiven Feststellung, der Fein-Timing-Messprozedur mit dem drahtlosen Gerät, um eine Ausbreitungszeit für Signale festzustellen, die mit dem drahtlosen Gerät ausgetauscht werden, wobei die Ausbreitungszeit zumindest teilweise auf Timing-Informationen basiert, die während der Fein-Timing-Messprozedur ausgetauscht werden;
Feststellen (920) einer Nähe zu dem drahtlosen Gerät basierend auf der Ausbreitungszeit; und
Durchführen (925) der automatischen drahtlosen Dockingsitzung mit dem drahtlosen Gerät zumindest teilweise basierend auf der Nähe, welche unter Benutzung der Fein-Timing-Messprozedur festgestellte wurde.

2. Verfahren nach Anspruch 1, weiter beinhaltend:
Senden eines Anforderungsrahmens für eine Fein-Timing-Messung an das drahtlose Gerät, um die Fein-Timing-Messprozedur zu initiieren, nach Präassoziationsentdeckung.

3. Verfahren nach Anspruch 1, wobei das Verfahren durch ein drahtloses Dockingcenter durchgeführt wird und das drahtlose Gerät einen drahtlosen Andocker beinhaltet.

4. Verfahren nach Anspruch 3, weiter beinhaltend:
Senden eines Anforderungsrahmens für eine Fein-Timing-Messung an den drahtlosen Andocker, um die Fein-Timing-Messprozedur zu initiieren, nachdem der drahtlose Andocker drahtlos an das drahtlose Dockingcenter angedockt ist.

5. Verfahren nach Anspruch 3, weiter beinhaltend:
Senden eines Anforderungsrahmens für eine Fein-Timing-Messung an den drahtlosen Andocker, um die Fein-Timing-Messprozedur zu initiieren, nach Präassoziationsentdeckung.

6. Verfahren nach Anspruch 1, wobei das Verfahren durch einen drahtlosen Andocker durchgeführt wird und das drahtlose Gerät einen drahtlosen Dockingcenter beinhaltet.

7. Verfahren nach Anspruch 1, wobei das Feststellen, dass das drahtloses Gerät die automatische drahtlose Dockingsitzung unter Benutzung der Fein-Timing-Messprozedur unterstützt, beinhaltet:
Empfangen eines erweiterten Fähigkeiteninformationselements von dem drahtlosen Gerät während Präassoziationsentdeckung, welches anzeigt, dass das drahtlose Gerät die Fein-Timing-Messprozedur unterstützt; und
Empfangen eines Serviceinformationsfeldes während Präassoziationsentdeckung, welches anzeigt, dass das drahtlose Gerät die automatische drahtlose Dockingsitzung unterstützt.

8. Verfahren nach Anspruch 7, wobei das erweiterte Fähigkeiteninformationselement empfangen wird in zumindest einem aus einem Bakensignal, oder einer Sondenanforderungsnachricht, oder einer Sondenantwortnachricht, oder einer Assoziationsanforderungsnachricht, oder einer Assoziationsantwortnachricht, oder einer Kombination hieraus.

9. Verfahren nach Anspruch 1, wobei das Feststellen, dass das drahtloses Gerät die automatische drahtlose Dockingsitzung unter Benutzung der Fein-Timing-Messprozedur unterstützt, beinhaltet:
Empfangen eines universellen plug-n-play, UPnP, Argumentfeldes während Nachassoziationsentdeckung, welches anzeigt, dass das drahtloses Gerät die automatische drahtlose Dockingsitzung unter Benutzung der Fein-Timing-Messprozedur unterstützt.

10. Verfahren nach Anspruch 1, wobei das Feststellen, dass das drahtloses Gerät die automatische drahtlose Dockingsitzung unter Benutzung der Fein-Timing-Messprozedur unterstützt, beinhaltet:
Empfangen einer universellen plug-n-play, UPnP, Aktionsantwort während Nachassoziationsentdeckung, welche anzeigt, dass das drahtloses Gerät die automatische drahtlose Dockingsitzung unter Benutzung der Fein-Timing-Messprozedur unterstützt.

11. Verfahren nach Anspruch 1, wobei das Feststellen, dass das drahtloses Gerät die automatische drahtlose Dockingsitzung unter Benutzung der Fein-Timing-Messprozedur unterstützt, beinhaltet:
Teilnehmen an einer Nachbarschafts-Gewahrseins-Netzwerk-, NAN, Prozedur, um einen Hinweis zu empfangen, dass das drahtloses Gerät die automatische drahtlose Dockingsitzung unter Benutzung der Fein-Timing-Messprozedur unterstützt.

12. Verfahren nach Anspruch 1, wobei die automatische drahtlose Dockingsitzung zumindest ein Andocken mit dem drahtlosen Gerät oder ein Abdocken mit dem drahtlosen Gerät beinhaltet.

13. Vorrichtung zur drahtlosen Kommunikation, beinhaltend:
Mittel zum Feststellen (910), dass ein drahtloses Gerät eine automatische drahtlose Dockingsitzung unter Benutzung einer Fein-Timing-Messprozedur unterstützt;
Mittel zum Durchführen (915), basierend auf einer positiven Feststellung, der Fein-Timing-Messprozedur mit dem drahtlosen Gerät, um eine Ausbreitungszeit für Signale festzustellen, die mit dem drahtlosen Gerät ausgetauscht werden, wobei die Ausbreitungszeit zumindest teilweise auf Timing-Informationen basiert, die während der Fein-Timing-Messprozedur ausgetauscht werden;
Mittel zum Feststellen (920) einer Nähe zu dem drahtlosen Gerät basierend auf der Ausbreitungszeit; und
Mittel zum Durchführen (925) der automatischen drahtlosen Dockingsitzung mit dem drahtlosen Gerät zumindest teilweise basierend auf der Nähe, welche unter Benutzung der Fein-Timing-Messprozedur festgestellte wurde.

14. Vorrichtung nach Anspruch 13, wobei die Mittel zum Durchführen der Fein-Timing-Messprozedur ferner beinhalten:
Mittel zum Senden eines Anforderungsrahmens für eine Fein-Timing-Messung an das drahtlose Gerät, um die Fein-Timing-Messprozedur zu initiieren, nach Präassoziationsentdeckung.

15. Computerprogramm beinhaltend Instruktion die bei Ausführung einen Computer dazu veranlassen, ein Verfahren gemäß irgendeinem der Ansprüche 1 - 12 durchzuführen.

## Revendications

1. Procédé (900) de communication sans fil, comprenant :
la détermination (910) qu'un dispositif sans fil prend en charge une session d'accueil sans fil automatique en utilisant une procédure de mesure fine du séquencement ;
l'exécution (915), sur la base d'une détermination positive, de la procédure de mesure fine du séquencement avec le dispositif sans fil pour déterminer un temps de propagation pour des signaux échangés avec le dispositif sans fil, le temps de propagation étant basé au moins en partie sur des informations de séquencement échangées durant la procédure de mesure fine du séquencement ;
la détermination (920) d'une proximité du dispositif sans fil sur la base du temps de propagation ; et
l'exécution (925) de la session d'accueil sans fil automatique avec le dispositif sans fil sur la base au moins en partie de la proximité déterminée en utilisant la procédure de mesure fine du séquencement.

2. Procédé selon la revendication 1, comprenant en outre :
l'envoi d'une trame de demande de mesure fine du séquencement au dispositif sans fil pour lancer la procédure de mesure fine du séquencement après une découverte de pré-association.

3. Procédé selon la revendication 1, dans lequel le procédé est effectué par un centre d'accueil sans fil et le dispositif sans fil comprend un dispositif accueilli sans fil.

4. Procédé selon la revendication 3, comprenant en outre :
l'envoi d'une trame de demande de mesure fine du séquencement au dispositif accueilli sans fil pour lancer la procédure de mesure fine du séquencement après que le dispositif sans fil accueilli a été accueilli sans fil par le centre d'accueil sans fil.

5. Procédé selon la revendication 3, comprenant en outre :
l'envoi d'une trame de demande de mesure fine du séquencement au dispositif accueilli sans fil pour lancer la procédure de mesure fine du séquencement après une découverte de pré-association.

6. Procédé selon la revendication 1, dans lequel le procédé est effectué par un dispositif accueilli sans fil et le dispositif sans fil comprend un centre d'accueil sans fil.

7. Procédé selon la revendication 1, dans lequel la détermination que le dispositif sans fil prend en charge la session d'accueil sans fil automatique en utilisant la procédure de mesure fine du séquencement comprend :
la réception d'un élément d'information de capacités étendues à partir du dispositif sans fil durant une découverte de pré-association indiquant que le dispositif sans fil prend en charge la procédure de mesure fine du séquencement ; et
la réception d'un champ d'informations de service durant une découverte de pré-association indiquant que le dispositif sans fil prend en charge la session d'accueil sans fil automatique.

8. Procédé selon la revendication 7, dans lequel l'élément d'information de capacités étendues est reçu dans au moins une balise, ou un message de demande de sondage, ou un message de réponse de sondage, ou un message de demande d'association, ou un message de réponse d'association, ou une combinaison de ceux-ci.

9. Procédé selon la revendication 1, dans lequel la détermination que le dispositif sans fil prend en charge la session d'accueil sans fil automatique en utilisant la procédure de mesure fine du séquencement comprend :
la réception d'un champ d'argument Plug-and-Play Universel, UPnP, durant une découverte de post-association indiquant que le dispositif sans fil prend en charge la session d'accueil sans fil automatique en utilisant la procédure de mesure fine du séquencement.

10. Procédé selon la revendication 1, dans lequel la détermination que le dispositif sans fil prend en charge la session d'accueil sans fil automatique en utilisant la procédure de mesure fine du séquencement comprend :
la réception d'une réponse d'action Plug-and-Play Universelle, UPnP, durant une découverte de post-association indiquant que le dispositif sans fil prend en charge la session d'accueil sans fil automatique en utilisant la procédure de mesure fine du séquencement.

11. Procédé selon la revendication 1, dans lequel la détermination que le dispositif sans fil prend en charge la session d'accueil sans fil automatique en utilisant la procédure de mesure fine du séquencement comprend :
la participation à une procédure de mise en réseau consciente du voisinage, NAN, pour recevoir une indication que le dispositif sans fil prend en charge la session d'accueil sans fil automatique en utilisant la procédure de mesure fine du séquencement.

12. Procédé selon la revendication 1, dans lequel la session d'accueil sans fil automatique comprend au moins l'accueil du dispositif sans fil ou la fin d'accueil du dispositif sans fil.

13. Dispositif de communication sans fil, comprenant :
des moyens pour déterminer (910) qu'un dispositif sans fil prend en charge une session d'accueil sans fil automatique en utilisant une procédure de mesure fine du séquencement ;
des moyens pour exécuter (915), sur la base d'une détermination positive, la procédure de mesure fine du séquencement avec le dispositif sans fil pour déterminer un temps de propagation pour des signaux échangés avec le dispositif sans fil, le temps de propagation étant basé au moins en partie sur des informations de séquencement échangées durant la procédure de mesure fine du séquencement ;
des moyens pour déterminer (920) une proximité du dispositif sans fil sur la base du temps de propagation ; et
des moyens pour exécuter (925) la session d'accueil sans fil automatique avec le dispositif sans fil sur la base au moins en partie de la proximité déterminée en utilisant la procédure de mesure fine du séquencement.

14. Dispositif selon la revendication 13, dans lequel les moyens pour exécuter la procédure de mesure fine du séquencement comprennent en outre :
des moyens pour envoyer une trame de demande de mesure fine du séquencement au dispositif sans fil pour lancer la procédure de mesure fine du séquencement après une découverte de pré-association.

15. Programme informatique comprenant des instructions qui, quand elles sont exécutées, amènent un ordinateur à mettre en oeuvre un procédé selon l'une des revendications 1 à 12.
